# NEW EUROPEAN PATENT SPECIFICATION

(11) **EP 0 304 115 B2**
(45) Date of publication and mention of the opposition decision: **18.04.2001**
(45) Mention of the grant of the patent: 15.06.1994
(21) Application number: 88201681.9
(22) Date of filing: 03.08.1988
(51) Int. Cl.: A23D 7/00, C11B 3/10, A23D 9/00, A23L 1/24

(54) **Marine/vegetable oil blend and products made therefrom**
Seeöl-Pflanzenöl-Mischung und daraus hergestellte Produkte
Mélange huile marine-huile végétale et produits préparés à partir de celui-ci

(30) Priority: 05.08.1987 GB 8718523
(43) Date of publication of application: 22.02.1989
(73) Proprietor: UNILEVER N.V., 3013 AL Rotterdam (NL); UNILEVER PLC, London EC4P 4BQ (GB)
(72) Inventor: Freeman, Ian Penn, Ravensden Bedford MK44 2RW (GB); van Lookeren, Gerard Johannes, NL-2612 XV Delft (NL); Padley, Frederick Bolton, Bedford MK41 8BG (GB); Polman, Robert George, NL-3137 NK Vlaardingen (NL)
(74) Representative: Mulder, Cornelis Willem Reinier, Dr.

(56) References cited:
- DE-A- 3 643 848
- FR-A- 1 574 487
- GB-A- 558 707
- GB-A- 1 476 307
- US-A- 2 976 156
- US-A- 3 011 892
- PATENT ABSTRACTS OF JAPAN, vol. 10, no. 310 (C-379)[2366], 22nd October 1986; & JP-A-61 119 138 (Yoshinori Kawashima) 06-06-1986
- PATENT ABSTRACTS OF JAPAN, vol. 10, no. 245 (C-368)[2301], 22nd August 1986;& JP-A-61 74 539 (Q.P. CORP.) 16-04-1986
- LURGI GmbH: "Refining of edible oils and fats", Express Information, November1985, pages 1-2
- Leatherhead Food R.A., Special Project P1823, Development of Foods Containing Unhydrogenated Fish Oil, pages 1-17 and 27-34.
- Record of Proceedings (Part 2) of the International Association of Fish Meal Manufacturers 26th Annual Conference, 1st-9th October 1986, pages 175-182.
- Minutes of Meeting of Scientific and Action Committee and Executive Council of the International Association of Fish Meal Manufacturers, April 1986, pages 1, 8, A3 and A4.
- Development of foods containing unhydrogenated fish oil. Report p. 1823 (1986). Leatherhead Food RA
- Sherwin, E.R. et al (1970) Studies on antioxidant treatments of crude vegetable oils. Journal of the American Oil Chemists Society, pp. 19-23
- Huffaker, J.E. (1978) TBHQ and citric acid improve quality of palm oil. Food Engineering, pp. 122-123
- Chang S.S. (1967) Processing of fish oils, in Stansby, M.E. (ed). Fish oils, their chemistry, technology, stability, nutritional properties, and uses. Avi publishing Company Inc. pp. 206-221
- Statutory declaration by Dr. D.P.J. Moran
- Extract from record of proceedings of IAFMM 26th annual conference 1986, part 2, pages i and ii, 1-4 and 175-182
- Statutory declaration of Dr. T.J. Pelura

## Description

The present invention relates to blends of marine oil and vegetable oil and to products made therefrom.

The present invention is concerned mostly with fish oils but extends inter alia to other marine oils, although the use of fish oils is preferred.

Fish oils, such as can be extracted from cod, herring, anchovy and menhaden, have enjoyed a longstanding prominence as foodstuffs. However, it is accepted that fish oils are generally quite unsuitable for such use in an unmodified form. Fish oils contain a considerable proportion of highly unsaturated fatty acids of high molecular weight. These large, unstable molecules deterioriate and oxidise rapidly after extraction and can only be considered for edible use after hydrogenation. Thus, fish oils have either been consumed in a fresh state or further processed by hydrogenation.

The use of hydrogenated oils in foodstuffs is, however, not favoured amongst certain consumers. Moreover, the hydrogenation process removes or modifies many components of the fish oils which are believed to be of dietary significance, particularly the very long chain eicosapentaenoic acid (EPA) and docosahexaenoic acid (DHA).

The extreme technical prejudice against natural fish oil is set forth clearly in "Margarine" by Andersen and Williams (Pergamon, London, 1968), pp 43-44, and repeated in "Bailey's Industrial Oil and Fat Products" (Wiley, New York, 1979). Even under conditions of extreme economic pressure, unmodified fish oil has not been found suitable for use in margarine, cooking fat and salad oil. See B.I.O.S. final report N° 1477 HMSO London 1947.

In order to facilitate the use of unhydrogenated fish oil in foodstuffs, it has been suggested that a flavour-masking agent, such as kaolin or calcium phosphate, can be added to the oil. This is disclosed in JP-A-55/15444. The use of such a masking agent does not, however, prevent the development of a fishy odour, but rather delays the initial formation of such an odour.

JP 61/74539 discusses an alternative approach to the problem. In that specification, it is suggested that fish oil containing no fish smell ingredients or precursors thereof should be employed. The precursors of fish smell ingredients are considered to be amines and ketones in JP 61/74539. However, the oil blends of fish and vegetable oil disclosed in this citation are said to develop a fishy smell despite their lack of smell ingredients and precursors.

It might be thought that the addition of anti-oxidants would stabilize fish oil. Experiment has shown that added alpha-tocopherol and mixed tocopherols at the 0.1% level seem to be the most effective anti-oxidants. However, the benefit gained by this addition is only to stabilize the oil for a few days. TBHQ is known to be a more effective anti-oxidant but the level of use is severely limited because of the extreme bitter taste of this compound. The use of added anti-oxidants does not therefore solve the technical problem and, worse still, may render the product unacceptable to certain consumers.

We have now determined that it is possible to employ fish oil in foodstuffs without the requirement for hydrogenation and obtain a product which does not suffer the disadvantages of the prior art.

According to a first aspect of the present invention there is provided a process for the preparation of a bland marine/vegetable oil blend which comprises blending unhydrogenated refined marine oil with vegetable oil characterized in that the oil are blended during refining the ratio of marine oil to vegetable oil being less than one to three, the temperature of the oil during refining is held below 200°C, and that the refined marine oil blended does not contain a synthetic antioxidant.

We have determined that it is absolutely crucial that the marine oil and the vegetable oil are blended during refining the marine oil so that substantially no deterioration of the refined marine oil occurs before blending.

Processes for mixing marine or fish oil with other oils, including vegetable oils have been disclosed in the literature.

In Patent Abstracts of Japan, Vol. 10, No 310 (c-379) [2366] an abstract of JP-A-61/119138 is given, describing mixing fish oil purified by molecular distillation at high temperatures with vegetable oil. No indication is given about mixing instant or mixing ratio.

In Patent Abstracts of Japan, Vol 10, No 245 (c-368)[2301] an abstract of JP-A-61/74539 is given which describes the addition of purified fish oil having nearly no fish smell, ingredients and precursors thereof to a fats blend, which may contain a vegetable oil or not, for manufacturing margarine. The fish oil is mixed with a polyhydric alcohol and a monoglyceride, stirred, deodorised and finally distilled at temperatures up to 290°C. No indication is given about the mixing instant.

Leatherhead Food Research Association (R.A.), report P 1823 "Development of Foods containing Unhydrogenated Fish Oil", April 1986, pages 1-17 and 27-34; Minutes of Meeting of Scientific and Action Committee and Executive Council of the International Association of Fish Meal Manufacturers, 21-25 April 1986, pages 1, 8, A3 and A4 and to some extent Records of Proceedings (Part 2) of the International Association of Fish Meal Manufacturers, 26th Annual Conference, 1-9 October 1986 pages 175-182 deal with the use of refined fish oils in certain foodstuffs. The more detailed disclosure is found in report 1823 of Leatherhead Food R.A. A series of foodstuffs containing refined fish oils (deodorised at 200°C) with added synthetic antioxidants are disclosed some of which were prepared using a fish oil/vegetable oil blend, others not. Some foodstuffs could not be prepared successfully, others contained only fish oil. Fish spreads or canned fish contained endogenous unrefined fish oil and did not aim at bland oil blends. Some fish oils had undergone flavour/odour reversion before being used and imparted a fishy flavour/odour, some fish/vegetable oil blends contained high amounts of fish oil (40% or more) etc. Other foodstuffs and blends were unclear as to actual composition. These documents cannot be regarded as a teaching how to prepare a bland tasting marine/vegetable oil blend. The notional expert is not provided with guidelines for processes how to prepare a bland marine/vegetable oil blend.

Typically, the marine oil is one or more of sardine oil, pilchard oil, menhaden oil, herring oil, anchovy oil, shark oil and cod oil. The commercially important fish oil oils in the past have been obtained from cod, herring, anchovy and menhaden. Moreover, certain fish, such as cod, halibut and shark have large oily livers which contain more than 50% of oil rich in vitamins A and D. It should be noted that the oil derived from the fish Sardinops caerulea is known in the U.S.A. as sardine oil and in Canada as pilchard oil. Japanese sardine oil is obtained from Clupanodon melanostica.

Generally, the vegetable oil is one or more of corn oil, sunflower oil and groundnut oil.

Preferably low-oleic sunflower oil is employed as the bulk of the vegetable oil.

The use of palm oil and lauric acid oils such as palm kernel fat is discouraged, as these oils have little preservative effect on the fish oil.

Edible compositions within the scope of the present invention include mayonnaise, margarine and other spreads, salad dressings, sauces, gravies and other condiments as well as oil blends per se for use in frying and baking, including water and oil emulsion systems, whether separable, such as dressings, or not, such as spreads.

It is vital for the performance of the invention that substantially no deterioration of the marine oil occurs before blending. If such deterioration does occur, producing a "fishy" odour, then blending will only dilute this odour and not remove it. It is considered possible that blending prevents the formation of odour by limiting the oxidative degradation of the marine oil. To this end it has been noted that even in blends containing below 25% marine oil an odour eventually develops which is partially characteristic of "off" vegetable oil and quite unlike the characteristically nauseous and fetid odour of aged fish oil.

A particular advantage of the present invention is that the products contain many of the long-chain polyunsaturated fatty acids of dietary significance which are found in fish oil. Moreover, the possible long term storage of the products of the present invention enables inter-seasonal and inter-species blending of fish oils to compensate for the marked seasonal and special variation of fatty acid content, especially as is found with menhaden and herring oils.

Oil blends within the scope of the present invention are suitable for shallow frying and baking without exhibiting the development of a pronounced fishy odour. The preferred oil blends have 10% or less marine oil with respect to the total oil content.

Preferably, refining includes the step of treating the marine oil with silicate. More preferably, the silicate treatment comprises either a so-called "silicate boil" or silicate column refining. In general, the refining techniques employed herein are similar to those known in the art and described in Bailey, (cit. ultra). However, particular care should be taken that the oil is not subjected to conditions of high temperature which are believed to reduce the EPA and DHA content. More particularly, it is important that the temperature during, for example, deodorisation, should be below 200°C. At higher temperatures some components of the oil may polymerise.

It is believed, as a result of UV absorption studies, that prolonged heating of unhydrogenated fish oils to temperatures above 200°C, or even to slightly lower temperatures for extended periods, promotes the formation of a monomeric cis-cis-trans conjugated triene and a related dimeric diene. While the formation of these reactive species does not, at least initially, reduce the titre of EPA and DHA in the oil, the dietary significance of these compounds has not been fully investigated. Thus, methods of refining by high-temperature molecular distillation to remove "fish smell precursors" chemically modify the product such that reactive species of unknown physiological effect are present.

### EXAMPLE 1 (not an embodiment of the current invention)

### PREPARATION OF COMPOSITION BY SILICA REFINING

Menhaden oil was extracted with methanol to reduce the free fatty acid content and neutralized with an excess of 0.1 N NaOH. The alkali-neutralized oil was bleached with 8% R169 bleaching earth at 90°C for 45 minutes under vacuum.

After filtering off the earth, the oil was dissolved in two volumes of hexane and passed through a silica column with a volume such that the ratio of silica to oil was 1:2. The oil was eluted from the column with a further four volumes of hexane.

The hexane solvent was distilled off and the oil deodorized at 180°C for 5 hours under N₂ at 3 mbars. 0.01% citric acid and 0.01% TBHQ were added at the beginning and the end of deodorization.

The oil was deodorized below 200°C and the deodorized oil was blended immediately with vegetable oil.

### EXAMPLE 2 (not an embodiment of the current invention)

### PREPARATION OF COMPOSITION BY "SILICA BOILING"

Alkali-neutralized menhaden oil was subjected to a "silicate boil".

To 100 parts of neutralized oil were added 1.5 parts of 7N sodium carbonate and one part of sodium silicate solution. The sodium silicate solution was prepared by dilution of 33% sodium silicate 1:1 with water. The temperature of the mixture was brought to 100°C and kept at this temperature for 30 minutes.

The oil was washed by stirring 10 parts of water into the mixture and separating. This washing was repeated until the water layer became clear. Usually this takes two or three washes.

The oil was dried and bleached and deodorized as in Example 1, and blended with vegetable oil.

The methods of Examples 1 and 2 have been applied both at laboratory scale and at pilot plant scale.

### EXAMPLE 3 (not an embodiment of the current invention)

### ALTERNATIVE BLEACHING PROTOCOL

The bleaching step of Example 2 was modified as follows: After the "silicate boiling" 0.1% citric acid (as 50% w/w solution) was added and the mixture kept at 90°C with stirring for 15 minutes; 4% bleaching earth (Tonsil ACCFF^{®} or comparable product) was added and the mixture was bleached firstly at 90°C for 20 minutes and secondly at 105-110°C for a further 30 minutes.

### EXAMPLE 4 (not an embodiment of the current invention)

### ODOUR DEVELOPMENT ON STORAGE

The products obtained from the methods of Examples 1-3 exhibited similar behaviour irrespective of whether the fish oil was menhaden oil as in the Examples given or Peruvian Anchovy oil as in a duplicate set of Examples, or whether the vegetable oil was corn oil, sunflower oil or groundnut oil. Oil blends were stored at room temperature (15-20°C) in closed bottles. The following results (given in Table 1) were obtained, with various blends prepared from corn oil and menhaden oil according to the method of Example 1.

**TABLE 1**

| Oil/oil blend | Odour | | | |
|---|---|---|---|---|
| | + 24 hrs | + 2 weeks | + 4 weeks | + 5 months |
| 10% menhaden in corn | bland | bland | bland | bland* |
| 25% menhaden in corn | bland | bland | bland | - |
| 50% menhaden in corn | bland | bland | slight fish | - |
| 75% menhaden in corn | bland | bland | slight fish | - |
| 100% menhaden | off | - | - | - |

| | | | | |
|---|---|---|---|---|
| * repeated successfully with 10% menhaden oil in sunflower oil and 10% menhaden oil in groundnut oil. | | | | |

### EXAMPLE 5 (not according to the invention)

### FRYING PROPERTIES

The 10% menhaden oil in corn oil was heated to 180°C and used to fry frozen potato chips. Frying continued for about 20 minutes. Very few members of a taste panel reported a flavour of fish in the chips.

### EXAMPLE 6 (not according to the invention)

### DRESSING PRODUCTS

Using fish oil and vegetable oil blends obtained by the method of Examples 1-3, edible compositions were prepared for use as salad dressings, and stored for periods of up to one year. Table 2 provides a formulation for one such composition.

**TABLE 2**

| Ingredient | % |
|---|---|
| Oil Blend | 43% |
| Vinegar | 18% |
| Starch | 6% |
| Salt | 4.8% |
| Garlic | 1% |
| Onion | 0.5% |
| Flavour | >1% |
| Colour | tr |
| Water | to 100% |

The oil blend was varied according to Table 3. The "abused" fish oil was stirred by bubbling air through the oil for the period of time indicated in brackets before blending with vegetable oil. Evaluation was performed after eleven months at ambient temperature (25°C), and the results are indicated in Table 3.

**TABLE 3**

| Sample | Oil Blend | | Evaluation after 11 months |
|---|---|---|---|
| | Veg. Oil | Fish Oil | |
| A | 100% corn | - | acceptable |
| B | 90% corn | 10% fish | acceptable |
| C | 90% corn | 10% abused fish (4 hr) | fishy taste |
| D | 90% corn | 10% abused fish (8 hr) | "terrible" fish smell |

### EXAMPLE 7 (not according to the invention)

### MAYONNAISE

Using fish oil and vegetable oil blends obtained by the method of Example 1-3, edible compositions of the mayonnaise type were prepared, and stored for periods of up to one year. Table 4 provides a formulation for one such composition.

**TABLE 4**

| Ingredient | % |
|---|---|
| Oil Blend | 82.0% |
| Vinegar | 3.5% |
| Sucrose | 1.5% |
| Salt | 0.7% |
| Egg | 8% |
| Na-benzoate | 0.1% |
| K-sorbate | 0.1% |
| Pepper | 0.1% |
| Water | to 100% |

The oil blend was varied according to Table 5. Evaluation was performed immediately, after six and after twelve months, and the results are indicated in Table 5.

**TABLE 5**

| Sample | Oil Blend | | Evaluation | | |
|---|---|---|---|---|---|
| | Veg. Oil | Fish Oil | Immediate | 6 months (ambient) | 12 months (chilled) |
| A | 100% bean | - | acceptable | acceptable | "old oil" flavour |
| B | 95% bean | 5% | acceptable | slight fish | no fish |
| C | 90% bean | 10% | very fishy | unacceptable | very bad |

## Claims

1. A process for the preparation of a bland vegetable/marine oil blend which comprises blending unhydrogenated refined marine oil with vegetable oil, the ratio of marine oil to vegetable oil being less than one to three, the temperature of the oil during refining is held below 200°C, characterized in that the oils are blended during refining and in that the refined marine oil blended does not contain a synthetic antioxidant.

2. A process according to claim 1 or 2, characterized in that the marine oil is one or more of sardine oil, pilchard oil, menhaden oil, herring oil, anchovy oil, shark oil and cod oil.

3. A process according to any one of the claims 1 to 3, characterized in that the vegetable oil is one or more of corn oil, sunflower oil and groundnut oil.

4. A process according to any one of the claims 1 to 4 characterized in that the blending ratio of marine oil to vegetable oil is not more than 1:9.

5. A process according to any one of the claims 1 to 5, characterized in that the bulk of the vegetable oil is low-oleic sunflower oil.

6. A process according to any one of the claims 1 to 6, characterized in that the refining includes the step of treating the marine oil with a silicate.

7. An edible composition comprising an oil blend obtainable by the process according to any one of the claims 1 to 7.

## Patentansprüche

1. Verfahren zur Herstellung einer aromaneutralen Mischung von pflanzlichem und marinem Öl, das das Mischen von nicht hydriertem raffiniertem marinem Öl mit pflanzlichem Öl umfaßt, wobei das Verhältnis von marinem Öl zu pflanzlichem Öl weniger als 1 zu 3 beträgt und die Temperatur des Öles während des Raffinierens unter 200°C gehalten wird, dadurch gekennzeichnet, daß die Öle während des Raffinierens gemischt werden und daß das gemischte raffinierte marine Öl kein synthetisches Antioxidationsmittel enthält.

2. Verfahren nach Anspruch 1, dadurch gekennzeichnet, daß das marine Öl eines oder mehrere von Sardinenöl, Pilchardöl, Menhadenöl, Heringsöl, Anchovisöl, Haiöl und Kabeljauöl ist.

3. Verfahren nach Anspruch 1 oder 2, dadurch gekennzeichnet, daß das pflanzliche Öl eines oder mehrere von Maisöl, Sonnenblumenöl und Erdnußöl ist.

4. Verfahren nach irgendeinem der Ansprüche 1 bis 3, dadurch gekennzeichnet, daß das Mischverhältnis von marinem Öl zu pflanzlichem Öl nicht mehr als 1:9 beträgt.

5. Verfahren nach irgendeinem der Ansprüche 1 bis 4, dadurch gekennzeichnet, daß die Hauptmenge des pflanzlichen Öles Sonnenblumenöl mit niedrigem Oleingehalt ist.

6. Verfahren nach irgendeinem der Ansprüche 1 bis 5, dadurch gekennzeichnet, daß das Raffinieren den Schritt der Behandlung des marinen Öles mit einem Silicat einschließt.

7. Eßbare Zusammensetzung, umfassend eine Ölmischung, erhältlich nach dem Verfahren gemäß irgendeinem der Ansprüche 1 bis 6.

## Revendications

1. Un procédé pour la préparation d'un mélange doux d'huiles marine/végétale, qui consiste à mélanger de l'huile marine raffinée non hydrogénée avec de l'huile végétale, le rapport de l'huile marine à l'huile végétale étant inférieur de 1 à 3, tandis que la température de l'huile pendant le raffinage est maintenue en dessous de 200 °C, caractérisée en ce que les huiles sont mélangées pendant le raffinage et que l'huile marine raffinée mélangée ne renferme pas d'agents antioxydants synthétiques.

2. Un procédé selon la revendication 1, caractérisé en ce que l'huile marine est une ou plus d'une huile de sardine, huile de pilchard, huile de menhaden, huile de hareng, huile d'anchois, huile de requin et huile de morue.

3. Un procédé selon l'une quelconque des revendications 1 à 2, caractérisé en ce que l'huile végétale est une ou plus d'une huile de maïs, huile de tournesol, et huile d'arachide.

4. Un procédé selon l'une quelconque des revendications 1 à 3, caractérisé en ce que le rapport de mélange de l'huile marine à l'huile végétale reste inférieur à 1 :9.

5. Un procédé selon l'une quelconque des revendications 1 à 3, caractérisé en ce que la plus grande partie de l'huile végétale est une huile de tournesol à basse teneur en acide oléique.

6. Un procédé selon l'une quelconque des revendications 1 à 5, caractérisé en ce que le raffinage comporte l'étape de traiter l'huile marine avec un silicate.

7. Une composition comestible comportant un mélange d'huile, qui peut être obtenu par le procédé selon l'une quelconque des revendications 1 à 6.
